# EUROPEAN PATENT APPLICATION

(11) **EP 2 492 505 A1**
(43) Date of publication of application: **29.08.2012**
(21) Application number: 10821613.6
(22) Date of filing: 08.10.2010
(51) Int. Cl.: F03G 1/06, H02P 1/00

(54) **SYSTEM FOR STORING ENERGY FOR USE IN STARTERS AND CONTROLLING ELECTRICAL SYSTEMS**

(30) Priority: 09.10.2009 ES 201031069
(71) Applicant: Acumener Investigacion Y Desarrollo, S.L., 28037 Madrid (ES)
(72) Inventor: MUÑOZ GUIJOSA, Juan Manuel, E-28037 Madrid (ES); CASERO FERNANDEZ-MONTES, Julián, E-28037 Madrid (ES); MUÑOZ SANZ, José Luis, E-28037 Madrid (ES); MANSO GARCIA, Juan José, E-28037 Madrid (ES); GONZALEZ RICO, Alfonso María, E-28037 Madrid (ES)
(74) Representative: Carpintero Lopez, Francisco
(86) International application number: PCT/ES2010/070653
(87) International publication number: WO 2011/042588

(57) **Abstract**

The present invention relates to a storage system for storing energy useful in starting and regulating electrical systems, comprising
transmission means (8) to transmit mechanical energy between an electric machine (9) and an energy storage device comprising at least one coil spring (1) arranged in a rotating shaft (4);
a braking and holding element (5) connected to the shaft (4) to alternately block the spring (1) or keep it in a released situation in which the electric machine (9) acts like a motor turning the rotating shaft (4) in a first direction tensing the spring (1) to store mechanical energy, whereas the rotation of the shaft (4) in the opposite direction releases the mechanical energy stored in the spring (1) such that the transmission means turn the electric machine (9) so that it operates like an electric generator.

## Description

### Technical Field of the Invention

The present invention is comprised in the technical field of energy accumulation and harnessing devices available in moving apparatuses or in surplus for another reason in an electrical system, delivering said energy in less time, i.e., with high power, such that it can be used in, for example, starting or regulating electrical systems, which are characterized by the demand of large amounts of energy in little time. The system is capable of absorbing said energy also in a short time span, i.e., at high power.

### Background of the invention

The accumulation of energy in electrical systems is very important because by means of the application thereof, starting processes are optimized to thereby reduce the power consumption of such processes.

It is therefore considered that optimizing starting processes by means of energy storage systems will entail considerable economic and environmental savings.

Storing energy with high energy and power densities together with high outputs is one of the main fields of research that is currently being conducted. The greatest possible accumulation of energy by means of the lowest weight and volume possible, together with loading and unloading times suited to each application, is sought.

The most common storage systems existing today are the following:
- Flow batteries (regenerative fuel cells) in which a reversible fuel cell stores and releases electricity by means of an electrochemical reaction occurring when the electrolyte flows through a membrane of the cell.
- Rechargeable batteries with high-temperature NaS batteries containing liquid sulfur and sodium separated by a solid ceramic electrolyte and the batteries of lithium ions (Li-ion) containing oxides of metal and carbon elements separated by an electrolyte containing lithium salts.
- Supercapacitors comprising two electrodes of opposite polarity which are separated by an electrolyte and store opposite electrical charges of equal magnitude on the surface of each electrode plate and a current is generated during discharge.
- Hydrogen storage according to which water is electrolyzed into hydrogen (and oxygen) which is stored in compressed state, and the hydrogen is used to generate energy by means of a fuel cell or a motor when necessary.

There are also elastic energy accumulation systems by means of using coil springs manufactured with composites, as described in patent application EP-A-2097655 (Elastodynamic Energy Accumulator-Regulator) with respect to electric wind generators, vehicles and non-stop power supply systems.

The drawback of high consumption in starting processes is present in most electrical systems.

For example, starting up an electric machine in general entails a large consumption of electrical energy and the additional need of having to develop a high torque to overcome the resistant inertia in the motor in standby, consuming several times the nominal operating intensity during said period and causing the motor to overheat. There are starting systems with reduced voltage such as star-delta starters, auto-transformer starters, primary resistance starters or soft starters. Although said systems allow improving the aforementioned problems, the results are not the most favorable, low outputs, high consumptions, electric motor deterioration, control difficulty and excess cost added by introducing these systems being produced.

Another example would be emergency electric generation systems of large electrical installations: little time lapses from the time power is cutoff until auxiliary generators are started up, during which time there is no power supply. This can be a huge drawback in hospitals, airports, etc. A system capable of supplying a small amount of energy in a short time, without useless energy expenditures in starting electric motors, would solve this drawback.

The same occurs, for example, in vehicles: generally, a larger amount of energy is necessary during the start-up due to the necessary acceleration of the entire mass. Furthermore, if the vehicle is electric, the need for a larger amount of energy for starting the motor is combined with this effect.

Contributing to solve these problems would also make it possible to improve current energy regulation systems which provide energy when it is lacking in the system to which they are connected, and they absorb energy from it when there is a surplus therein: a simple and low-cost system such as that described, capable of delivering and absorbing an industrially significant amount of energy in short time spans, i.e., at high powers, has an immediate and advantageous application in regulation.

By using coil springs manufactured with a high elastic energy absorption and delivery capacity (for example, composites with a polymeric matrix and carbon, glass fiber reinforcement, etc., though more examples will be provided below), it is possible to transmit high mechanical torque for a considerable number of revolutions. This allows providing energy in the conditions necessary for start-up.

The energy accumulation systems described above have drawbacks, such as high cost, unfavorable energy efficiency, limited operating safety and/or a rather short service life.

### Description of the Invention

The object of the present invention is to overcome the drawbacks of the state of the art described above by means of a storage system for storing energy useful in starting and regulating electrical systems, comprising
an energy storage device comprising at least one coil spring housed in a casing and arranged in a rotating shaft to store mechanical energy when the rotating shaft rotates in a first load direction tensing the coil spring, and to release mechanical energy stored in the coil spring when the rotating shaft rotates in a second direction, opposite the first direction, in which the coil spring is unloaded;
loading means to deliver energy generated by an electric motor to the energy storage device;
stored energy unloading means to transmit energy stored in the energy storage device to a power generator; and
control means connected on one hand to the loading means, to the unloading means and to the storage device, and on the other to a control system;
which system
comprises an electric machine capable of acting like an electric motor and a power generator, and controlled by means of power electronics;
comprises a braking and holding element connected to the rotating shaft and controlled by locking control means to keep the coil spring alternately in a blocked situation in which the rotating shaft does not rotate or in a released situation in which the rotation of the rotating shaft in said first direction driven by the loading means tenses the coil spring to store mechanical energy, whereas the rotation of the rotating shaft in the second direction releases the mechanical energy stored in the coil spring;
the unloading means comprise a rotational movement transmission system and a torque and speed variation system;
the transmission system is interconnected between said electronic machine and the torque and speed variation system, and the torque and speed variation system is interconnected between the transmission system and the rotating shaft of the storage device;
when supplied with electricity, the electric machine (9) operates like an electric motor which tenses the coil spring (1), whereas when the coil spring (1) releases mechanical energy, the electric machine (9) operates like an electric generator;
such that the system absorbs or delivers energy by means of coupling it to the electric machine (9) which, controlled by means of the power electronics (10), converts the mechanical energy stored in the spring (1) into electrical energy and vice versa to start electric motors or regulate electrical systems or networks.

In view of the features described above, the invention provides a mechanical energy storage device by means of at least one coil spring, which can be formed by one spring or a set of springs arranged in series or in parallel and can be coupled to a motor to allow start-up thereof by means of unloading this previously stored mechanical energy. The spring of the system is compressed absorbing energy and being reloaded, accumulating mechanical energy which is subsequently used for starting the motor by means of the extension of the coil spring. The spring can be of the type described in patent application EP-A-2097655, different springs also being able to be used, such as coil springs with variable torque, springs the shape of which before being mounted in the casing or in the operating arrangement is defined with any type of spiral (Archimedean spiral, logarithmic spirals, etc.), the resistant section of the spring being able to have different configurations: hollow or solid monolithic section with different shapes, rectangular, circular, elliptical, etc.; sandwich section made up of skins on the outer faces and core in the central part, which can be, for example, foam, honeycomb, etc.; sandwich section with one skin having a different width than the other one, or laminated with sheets of different widths, and in all cases being able to vary along the length of the spring the resistant characteristics of the sections (shape, width, thickness, reinforcement, material). Furthermore, and for the purpose of increasing energy density, materials with an allowable tension- high Young modulus (like some engineered ceramic materials or elastomers) can be used. The use of spaces subjected to little mechanical stress, such as the core, for example, in sandwich sections or the hollow part in hollow monolithic sections, is also provided for arranging non-elastic storage systems, for example, batteries. Energy density can likewise be increased if piezoelectric, piezoresistive or electroactive materials (for example polymers), or recycled, organic materials, or composites thereof are placed in the areas of the spring that will experience greater deformation.

In one embodiment of the invention, the coil spring is attached to a central shaft and fixed to an outer casing and is driven by said shaft by means of the application of a twisting moment allowing the accumulation of energy in mechanical form for subsequent reuse thereof.

Once the energy is stored, is can be used to start the motor. For greater functionality, the system is preferably designed such that it is capable of storing sufficient mechanical energy to hot- and cold-start a certain number of times. As previously mentioned in the present specification, the coil spring can be formed by a set of springs arranged in series or in parallel for the purpose of reducing radial or longitudinal dimensions thereof. In another embodiment, springs arranged in separate shafts are provided for loading and unloading the storage system, the central shaft being the system loading shaft, and the outer casing being attached to a secondary shaft of the reduction gearing as the unloading shaft or vice versa.

When several springs are arranged in series, it is necessary to introduce attachment elements between them such that the rotation of each spring causes the rotation of the next spring, so each coil spring is attached at one end of the attachment element and at the opposite the end it is attached to the attachment element of the next spring. Likewise, several spirals offset by a certain angle contained in each attachment element can be introduced to optimize available space. That of said attachment elements located at one of the ends can be fixed and that of the opposite end can be integral with the drive shaft of the coil spring or it itself can act as a movement and torque transmission shaft. The different discs can be attached through adhesive, through a form fit mechanical connection or any fixing mechanism.

Particularly, in the series arrangement of several springs, each of the springs of the energy storage device is respectively arranged between two attachment elements which are arranged in the rotating shaft, and the attachment elements comprise a first end attachment element and a second end attachment element, and at least one intermediate attachment element susceptible to rotating about the rotating shaft. One of the end attachment elements is integral with the rotating shaft and rotates with the rotating shaft, and the other one is stationary and does not rotate with the rotating shaft, and each coil spring is attached at one of its ends to a central part of an attachment element and at its other end to a peripheral part of the adjacent attachment element.

In one embodiment of the series arrangement of several coil springs, each coil spring is arranged between a front surface and a rear surface of respective adjacent attachment elements and is peripherally surrounded by an annular body of an attachment element, the annular body comprising an open side, a side closed by a wall and an annular inner surface together forming an inner cavity in which the corresponding coil spring is housed.

At least one of the end attachment elements and each intermediate attachment element respectively have a central cylindrical projection with a diameter less than the annular body, emerging from the front surface and having an axial passage traversed by the rotating shaft. The first end of each coil spring is fixed to the cylindrical projection of one of the attachment elements, and the second end of each coil spring is fixed in the annular body of the adjacent attachment element. In turn, the attachment elements are immobilized with respect to one another, such that, when each coil spring is connected to two of the attachment elements, the rotation of the rotating shaft in said first direction successively tenses the coil springs arranged between the attachment elements, and the rotation of the rotating shaft in said second direction successively releases the coil springs arranged between the attachment elements. In turn, the stationary end attachment element can comprise a disc-shaped body from the front surface of which said cylindrical projection emerges.

At least one of the coil springs can comprise a first coil body and a second coil body arranged offset with respect to one another, each coil body being attached at one end to a first part of said central part of an attachment element and at the other end to a second part of said peripheral part of the adjacent attachment element, the respective coils of the coil bodies being arranged in an alternated and concentric manner. The offset of the coil bodies can be, for example, 180°.

The braking and holding element which allows fixing the spring in stationary conditions by means of locking is arranged attached to the rotating shaft. Locking can be done by means of using a braking device which can be, for example, a device with brake discs, shoes, an electromagnetic brake or locking brake or another similar device, and/or a ratchet or other mechanical locking or retention method. The braking and holding element can be driven by means of a preferably electromagnetic locking actuator, although it can also be electrical, pneumatic or hydraulic. When the braking and holding element is a ratchet mechanism, a braking device can additionally be arranged to apply a brake to the shaft once the necessary energy is unloaded. The braking device can be a device with brake discs, shoes, an electromagnetic brake or locking brake or another similar device. The braking device can be driven by means of a preferably electromagnetic braking actuator, although it can also be electrical, pneumatic or hydraulic.

It is inferred from the preceding description that the present invention overcomes the drawbacks of the systems of the state of the art by means of a simple and effective system.

The system can be used to absorb and deliver energy to an electric machine which is capable of acting like a motor and generator which, controlled by means of suitable power electronics, is capable of converting the energy stored in the spring mechanically into electrical energy, and vice versa. High electric power is thereby allowed for, for example, starting electric motors or regulating electrical systems or networks of another type.

In this application, the movement transmission shaft is connected to an electric machine capable of acting like both a motor and an electric generator, it sometimes being necessary to introduce between both systems a torque and rotation revolution varying element such that the operating conditions adapt to those demanded both by the storage system and by the electric machine used.

As a result of the release of the energy stored in the spring, the electric machine introduced therein starts operating, thereby generating electricity which can be used in starting or regulating electrical systems, such that the high consumption of the starting process comes from energy previously stored and obtained from energy not previously used.

Likewise, if the electric machine is supplied with electricity, it will be operating like a motor, the storage of energy in the springs thereby taking place as a result of the rotational movement reaching them.

The operation of the different states of the motor/generator is controlled through power electronics depending on the different states of the control variables of the system.

As a final complement of this description, it must be indicated that in certain applications a damping or absorption system for damping or absorbing vibrations, particularly twisting vibrations, in the event of very rapid loading or unloading, as well as a torque limiting system which could be mechanical, hydraulic, electrical, etc...., preventing the problems derived from a very rapid loading or unloading, and provided that the control system had not acted due to that rapidness, may be necessary.

### Brief Description of the Drawings

Aspects and embodiments of the invention are described below based on several drawings in which
Figure 1 is a schematic view of the elements forming the assembly of the system according to the invention;
Figure 2 shows a two-step series attachment arrangement of coil springs with two inputs;
Figure 3 shows another two-step series attachment arrangement of union of coil springs;
Figure 4 shows a cross-section of one of the coil springs illustrated in Figure 2;

Reference numbers identifying the following elements can be seen in these drawings:
- 1: coil springs
- 1A: first coil body
- 1 B: second coil body
- 2: attachment discs of the coil springs
- 3: casing
- 4: shaft or rotational shaft of the springs
- 5: braking and holding element
- 6: reducing mechanism
- 7: electromagnetic actuator
- 8: input/output shaft of the reducing mechanism
- 9: motor/electric generator
- 10: power electronics
- 11: electrical network
- 12: first end attachment element
- 12a: annular body
- 12b: inner surface
- 12c: front wall
- 12d: cylindrical projection
- 12e: inner passage
- 12': intermediate attachment element
- 12a': annular body
- 12b': inner surface
- 12c': front wall
- 12d': cylindrical projection
- 12e': inner passage
- 13: second end attachment element
- 13a: disc-shaped body
- 13b: cylindrical projection
- 13cc: inner passage

### Embodiments of the invention

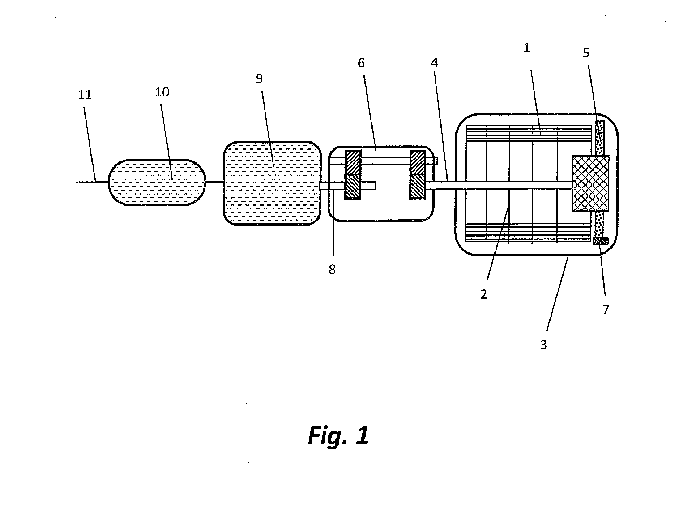

Figure 1 shows an embodiment of a system for starting and regulating electrical systems. Said system is formed by a set formed by several coil springs in series -1- attached through the attachment discs -2- and protected by the casing -3-. The shaft -4- of the set of coil springs -1- is attached both to the braking and holding element -5- and to the speed and torque variation element in the form of reducing mechanism -6-. The braking and holding element -5- comprises a ratchet holding mechanism which is controlled through the electromagnetic actuator -7-. The shaft -8- of the reducing mechanism -6- is connected to the motor/electric generator -9-, and the latter is in turn connected to the element responsible for electronic power control -10- the output of which is connected to the electrical network -11- in which the electrical energy generated through the proposed system is to be used, such as starting an electrical system.

When the load state of the springs 1 is high enough and electrical energy is to be generated, the electromagnetic actuator -7- acts on the braking and holding system -5-, causing the movement of the shaft -4- of the set of springs -1-. The reducing mechanism -6- adapts the operating conditions to those demanded by the motor/generator -9-, such that it produces electrical energy which is delivered to the network -11- in the necessary conditions as a result of the actuation of the power electronics -10-depending on the different control variables. To end the unloading process for unloading the set of springs -1-, the electromagnetic actuator -7- again puts the braking and holding system -5- in its initial position, causing the rotation of the shaft -4- of the set of coil springs -1- to stop.

To reload the set of coil springs -1-, the electronic power control element -10- establishes the conditions necessary for supplying power to the motor -9- as a result of the electrical energy taken from the electrical network -11-. The electromagnetic actuator -7- releases the braking and holding system -5-, so through the movement of the motor -9- and the actuation of the reducing mechanism -6-, the set of coil springs -1- is reloaded as a result of the movement of the shaft -4-. When the reloading process is to be stopped, the power electronics -10- stop supplying power to the motor -9-and the electromagnetic actuator -7- returns the retaining mechanism -5- to its initial position.

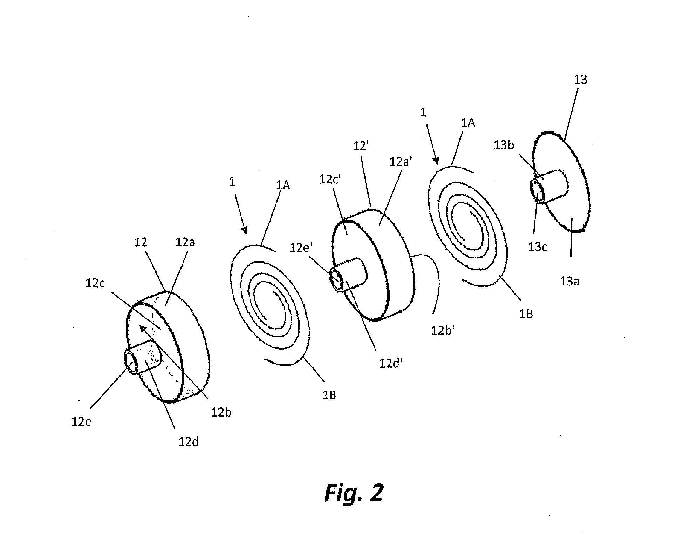

Figure 2 shows an embodiment of the series attachment of several coil springs -1-. The diagram depicted corresponds to two coil springs -1-, it being possible to introduce a larger number of coil springs -1- similarly to that described below.

As can be seen, the springs -1- are arranged respectively between two attachment elements -12 - 12'-, -12' - 13- which are arranged in the rotating shaft (not shown in Figure 2), there being a first end attachment element -12-integral with the rotational shaft -4- and rotating therewith, a second stationary end attachment element -13- not rotating with the rotational shaft -4- so it can be fixed to the casing of the storage device, and an intermediate attachment element -12'- susceptible to rotating about the rotational shaft -4-.

Particularly, each coil spring -1- is arranged between a front surface and a rear surface of respective adjacent attachment elements -12-, -12'-, -13-, and is peripherally surrounded by an annular body -12a-, -12a'- of one of the attachment elements -12-, 12'-. The annular body -12-, -12'- comprises an open side, a side closed by a front wall -12c-, -12c'- and an annular inner surface -12b-, -12b'- together forming an inner cavity to house the corresponding coil spring -1-.

The attachment elements -12-, -12'-, -13- respectively have a central cylindrical projection -12d-, -12d'-, -13b- with a diameter less than the annular body -12a-, -12a'-, emerging from the front surface and having an axial passage -12e-, -12e'-, -13c- for the passage of the rotational shaft -4-. It can also be seen that the stationary end attachment element -13- comprises a disc-shaped body -13a- from the front surface of which said cylindrical projection -13b- emerges.

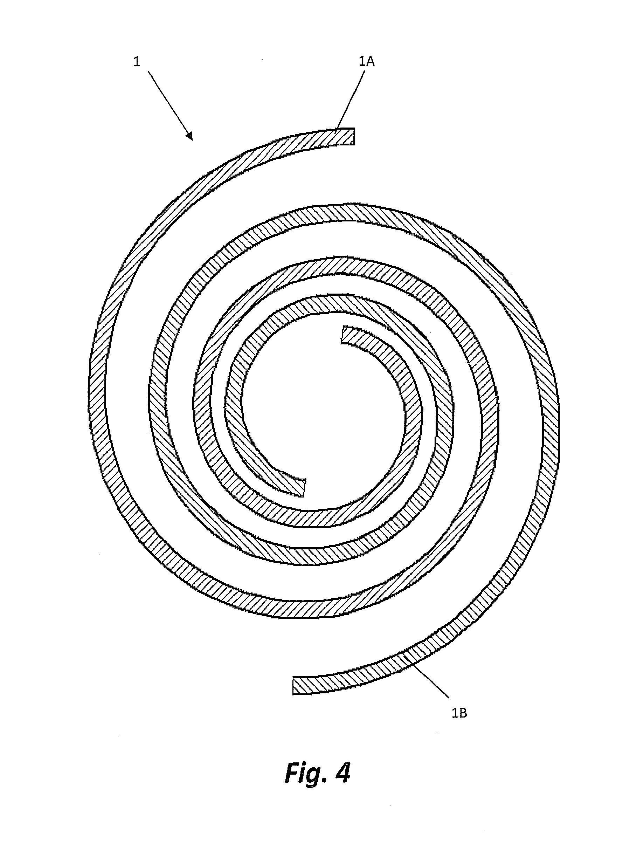

Each spring -1- is made up of two coil bodies -1A-, -1B- offset with one another by an angle of 180°, which can be seen in greater detail in Figure 4. The first end of each coil body -1A-, -1 B- is fixed to a part of the corresponding cylindrical projection -12d'-, -13b- of one of the attachment elements -12-, 12'-, -13-, and the second end of each coil body -1A-, -1B- is fixed on the inner surface -12b-, -12b'- of the annular body -12a-, -12a'- of the adjacent attachment element -12-, 12'-.

Since each coil spring -1- is connected to two of the attachment elements -12-, -12'-, -13- and since the second attachment element -13- is stationary, the rotation of the first attachment element -12- integral with the rotational shaft -4- in one direction successively tenses the coil springs -1-arranged between the attachment elements -12-, -12'-, -13-, whereas the rotation of the attachment element -12- in the opposite direction successively releases the coil springs -1-.

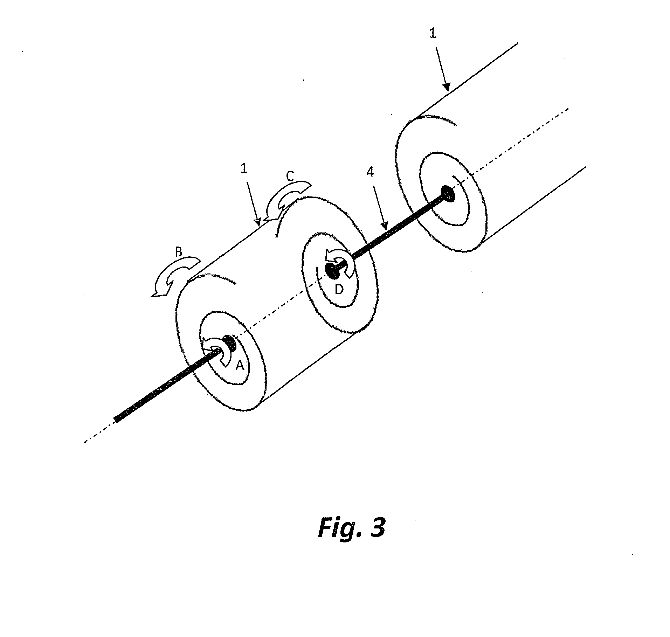

Figure 3 shows another possible form of series arrangement of the coil springs -1- by means of the alternative clockwise and counterclockwise winding of every two consecutive springs -1-, and the alternating attachment of annular body with annular body and of cylindrical projection with cylindrical body.

By introducing a rotation -A- in the shaft of the first coil spring 1-, the annular body will turn in direction -B-. If this annular body is attached to the annular body of a coil spring -1- wound in the opposite direction, the rotation -C- received by the latter will load that spring -1- and produce a rotation in the shaft -4- thereof in direction -D-.

Now by attaching the shaft -4- of this spring -1- with that of a third coil spring -1-, wound in the same direction as the first one, i.e., opposite the second one, the third spring -1- can also be loaded. The unloading operation occurs in a similar manner but in the reverse direction.

## Claims

1. Storage system for storing energy useful in starting and regulating electrical systems, comprising
an energy storage device comprising at least one coil spring housed in a casing and arranged in a rotating shaft to store mechanical energy when the rotating shaft rotates in a first load direction tensing the coil spring, and to release mechanical energy stored in the coil spring when the rotating shaft rotates in a second direction, opposite the first direction, in which the coil spring is unloaded;
loading means to deliver the mechanical energy generated by an electric motor to the energy storage device,
stored energy unloading means to transmit energy stored in the energy storage device to a power generator; and
control means connected on one hand to the loading means, to the unloading means and to the storage device, and on the other to a control system, **characterized in that**
it comprises an electric machine (9) capable of acting like an electric motor and an electric power generator and is controlled by means of power electronics (10);
it comprises a braking and holding element (5) connected to the rotating shaft (4) and controlled by locking control means (7) to keep the coil spring (1) alternately in a blocked situation in which the rotating shaft (1) does not rotate or in a released situation in which the rotation of the rotating shaft (1) in said first direction driven by the loading means (9) tenses the coil spring (1) to store mechanical energy, whereas the rotation of the rotating shaft (1) in the second direction releases the mechanical energy stored in the coil spring (1);
the unloading means comprise a rotational movement transmission system (8), and a torque and speed variation system (6);
the transmission system (8) is interconnected between said electric machine (9) and the torque and speed variation system (6), and the torque and speed variation system (6) is interconnected between the transmission system (8) and the rotating shaft (4) of the storage device;
when supplied with electricity, the electric machine (9) operates like an electric motor which tenses the coil spring (1), whereas when the coil spring (1) releases mechanical energy, the electric machine (9) operates like an electric generator;
such that the system absorbs or delivers energy by means of coupling it to the electric machine (9) which, controlled by means of the power electronics (10), converts the mechanical energy stored in the spring (1) into electrical energy and vice versa to start electric motors or regulate electrical systems or networks.

2. System according to claim 1, **characterized in that** the energy storage device comprises at least one set of coil springs (1) connected to the rotating shaft (4).

3. System according to claim 1 or 2, **characterized in that** the braking and holding element (5) comprises a ratchet mechanism arranged in the rotating shaft (4).

4. System according to one of claims 1 to 3, **characterized in that** the braking and holding element (5) comprises a braking device arranged in the rotating shaft (4) and controlled by braking control means.

5. System according to claim 4, **characterized in that** the braking device is a disc brake.

6. System according to claim 4, **characterized in that** the braking device is an electromagnetic brake.

7. System according to one of the preceding claims, **characterized in that** the energy storage device comprises a plurality of coil springs (1) arranged in series in the rotating shaft (4).

8. System according to one of the preceding claims, **characterized in that** the energy storage device comprises a plurality of coil springs (1) arranged in series in the rotating shaft (4), and **in that** the rotating shaft (4) is connected to at least one auxiliary rotating shaft in which a plurality of additional coil springs (1) arranged in series is mounted.

9. System according to claim 6 or 7, **characterized in that**
the coil springs (1) of the energy storage device are respectively arranged between two attachment elements (12, 12', 13) arranged in the rotating shaft (4);
the attachment elements (12, 12', 13) comprise a first end attachment element (13) and a second end attachment element (13), and at least one intermediate attachment element (25') susceptible to rotating about the rotating shaft (4);
one of the end attachment elements (12, 13) is integral with the rotating shaft (4) and rotates with the rotating shaft (4), and the other one is stationary and does not rotate with the rotating shaft (4);
each coil spring (1) is attached at one end to a central part of an attachment element (12, 12', 13) and at the other end to a peripheral part of the adjacent attachment element (12, 12', 13).

10. System according to claim 8, **characterized in that**
each coil spring (1) is arranged between a front surface and a rear surface of respective adjacent attachment elements (12, 12', 13), and is peripherally surrounded by an annular body (12a, 12a') of an attachment element (12, 12');
the annular body (12a, 12a') comprises an open side, a side closed by a wall (12c, 12c') and an annular inner surface (12b, 12b') together forming an inner cavity;
at least one of the end attachment elements (12, 13) and each intermediate attachment element (12') respectively has a central cylindrical projection (12d, 12d', 13b) with a diameter less than the annular body (25a, 25a') and emerging from the front surface;
each cylindrical projection has an axial passage (12e, 12e', 13c) traversed by the rotating shaft (4);
the first end of each coil spring (1) is fixed to the cylindrical projection (25d, 25d', 26b) of an attachment element (25, 25', 26) and the second end of each coil spring (1) is fixed in the annular body (25a, 25a') of the adjacent attachment element (25, 25');
the attachment elements (25, 25', 26) are immobilized with respect to one another;
such that the rotation of the rotating shaft (1) in said first direction successively tenses the coil springs (1) arranged between the attachment elements (25, 25', 26), and the rotation of the rotating shaft (1) in said second direction successively releases the coil springs (1) arranged between the attachment elements (25, 25', 26).

11. System according to claim 9, **characterized in that** the stationary end attachment element (26) comprises a disc-shaped body (26a) from the front surface of which said cylindrical projection (26b) emerges.

12. System according to one of claims 8 to 10, **characterized in that** at least one coil spring (1) comprises a first coil body (1A) and a second coil body (1 B) arranged offset with respect to one another, each coil body (1A, 1 B) being attached at one end to a first part of said central part of an attachment element (25, 25', 26) and at the other end to a second part of said peripheral part of the adjacent attachment element (25, 25', 26), the respective coils of the coil bodies (1A, 1 B) being arranged in an alternated and concentric manner.

13. System according to claim 11, **characterized in that** the offset of the coil bodies (1A, 1 B) is comprised between 180° and 45°.
